# EUROPÄISCHE PATENTSCHRIFT

(11) **EP 1 881 652 B1**
(45) Veröffentlichungstag und Bekanntmachung des Hinweises auf die Patenterteilung: **30.09.2009**
(21) Anmeldenummer: 06015265.9
(22) Anmeldetag: 21.07.2006
(51) Int. Cl.: H04L 12/40, H04L 12/26

(54) **Feldbussystem bestehend aus Knoten mit integrierter Buswächtereinheit**
Field bus system being composed of nodes with integrated bus monitoring unit
Système de bus de terrain composé de noeds avec surveillance de bus intégrée

(43) Veröffentlichungstag der Anmeldung: 23.01.2008
(73) Patentinhaber: SIEMENS AKTIENGESELLSCHAFT, 80333 München (DE)
(72) Erfinder: Brückner, Dieter, 96199 Unterleiterbach (DE); Klotz, Dieter, Dr., 90768 Fürth (DE); Spichtinger, Klaus, 92551 Stulln (DE)

(56) Entgegenhaltungen:
- EP-A- 0 798 895
- EP-A- 1 011 289
- DE-A1- 10 148 325

## Beschreibung

Die Erfindung betrifft einen Kommunikationsverbund, insbesondere einen Kommunikationsverbund, wie er sich bei einer Realisierung einer Automatisierungslösung mittels eines Automatisierungssystems mit insbesondere den davon umfassten Automatisierungsgeräten als Kommunikationsteilnehmer ergibt. Allgemein bezieht sich die Erfindung auf einen Kommunikationsverbund mit mindestens einem ersten und einem zweiten Kommunikationsteilnehmer.

Bei heute insbesondere zur Automatisierung technischer Prozesse allgemein verwendeten Systemen ist deren verteilte Realisierung üblich, wobei die von dem Automatisierungssystem umfassten Geräte untereinander kommunikativ zum Austausch von Daten und/oder Steuersignalen untereinander und mit dem jeweils gesteuerten technischen Prozess kommunikativ, insbesondere über ein Bussystem, verbunden sind. Der Datenaustausch erfolgt dabei in an sich bekannter Art und Weise durch Übermittlung von Telegrammen, die dem oder jedem für das jeweilige Bussystem definierten Protokoll genügen. Eine Gesamtheit der über das Bussystem während eines bestimmten Zeitabschnitts übermittelten Telegramme wird auch als Busverkehr bezeichnet. Als Kommunikationsverbund wird hier und im Folgenden eine beliebige Mehrzahl solcher Kommunikationsteilnehmer, also zumindest zwei Kommunikationsteilnehmer, aufgefasst. Der Begriff Kommunikationsverbund kann in diesem Zusammenhang sämtliche an ein Bussystem angeschlossene Kommunikationsteilnehmer bezeichnen oder auch nur einzelne Kommunikationsteilnehmer an diesem Bussystem, z. B. einzelne oder alle einem bestimmten Segment eines solchen Bussystems zugeordnete Kommunikationsteilnehmer.

Beim Auftreten von Problemen in einem Bussystem kann oft das verursachende Gerät oder die Komponente nicht sofort ermittelt werden. Für eine vergleichsweise verlässliche Diagnose bietet sich die so genannte Leitungsanalyse an. Durch eine solche Leitungsanalyse kann eindeutig das Fehlverhalten von Kommunikationsteilnehmern nachgewiesen werden. Für einen solchen Nachweis, also im Zusammenhang mit einer Leitungsanalyse, wurde bisher ein so genannter Busmonitor angeschlossen. Ein solcher Busmonitor zeichnet den Busverkehr, also die im Kommunikationsverbund übertragenen Daten, auf. Des Weiteren ist durch den Busmonitor in gewissem Umfang auch eine Analyse der aufgezeichneten Daten vorgesehen. Bei bestimmten Ausprägungen von Bussystemen, z. B. dem so genannten PROFIBUS, kann an jeder Stelle der komplette Busverkehr beobachtet werden. Dies ist bei Bussen mit so genannten Punkt-zu-Punkt Verbindungen aufgrund der so genannten Switch-Technologie, z. B. bei Ethernet, PROFINET oder proprietärer Rückwandbusse, nicht mehr möglich.

Aus der Druckschrift DE 101 48 325 A1 Belschner et al. "Buswächtereinheit" ist ein Datenbussystem eines Kraftfahrzeuges bekannt, bei dem verschiedene Knoten jeweils mit einer Busmonitor-Funktionseinheit versehen sind. Die Busmonitor-Funktionseinheit weist dabei Zeiterfassungsmittel auf, die auf Zeitmuster des Datenbusses getriggert sind, um eine Fehlkommunikation zu erkennen. Weiter ist in jedem der Datenknoten eine Diagnoseeinheit vorgesehen, welche dazu geeignet ist, bei einer Fehlfunktion der Busmonitor-Funktionseinheit diese außer Betrieb zu setzen.

Vor diesem Hintergrund besteht eine Aufgabe der vorliegenden Erfindung darin, einen Kommunikationsverbund anzugeben, der eine Untersuchung der o. g. Art möglich macht. Des Weiteren soll ein Verfahren für eine solche Untersuchung angegeben werden.

Erfindungsgemäß wird diese Aufgabe mit einem Kommunikationsverbund mit den Merkmalen des Anspruchs 1 gelöst. Dazu ist bei einem Kommunikationsverbund mit mindestens einem ersten und einem zweiten Kommunikationsteilnehmer vorgesehen, dass mindestens einer der Kommunikationsteilnehmer eine Busmonitor-Funktionseinheit umfasst, die die Funktionalität eines Busmonitors abdeckt, und dass der mindestens eine Kommunikationsteilnehmer mit der Busmonitor-Funktionseinheit nicht nur temporär Bestandteil des Kommunikationsverbunds ist, also dem Kommunikationsverbund nicht nur zeitweise zugeordnet ist. Dabei ist die Busmonitor-Funktionseinheit manuell oder automatisch aktivier- oder deaktivierbar. Eine manuelle Aktivier- oder Deaktivierbarkeit ermöglicht eine besonders einfache Realisierungsform auf Seiten des die Busmonitor-Funktionseinheit umfassenden Kommunikationsteilnehmers. Im einfachsten Fall kann zur Aktivierung oder Deaktivierung ein Schaltelement oder dergleichen vorgesehen sein, das von einem Bediener betätigt wird. Es ist außerdem vorgesehen, dass die Busmonitor-Funktionseinheit automatisch aktivier- und deaktivierbar ist. Dafür kommt ein mit dem die Busmonitor-Funktionseinheit umfassenden Kommunikationsteilnehmer kommunikativ verbundener weiterer Kommunikationsteilnehmer, also gemäß der oben eingeführten Bezeichnung entweder der erste oder der zweite Kommunikationsteilnehmer, in Betracht. Eine automatische Aktivierbarkeit oder Deaktivierbarkeit hat den Vorteil, dass kein unmittelbarer Eingriff eines Bedieners erforderlich ist und für diesen damit z. B. die Notwendigkeit entfällt, sich zum Installationsort des jeweiligen Kommunikationsteilnehmers begeben zu müssen. Indem einzelne oder mehrere Busmonitor-Funktionseinheiten über ein im Kommunikationsverbund unterstütztes Busprotokoll aktivier- oder deaktivierbar sind, ergibt sich eine reibungslose Integration der Aktivierung oder Deaktivierung der jeweiligen Busmonitor-Funktionseinheiten in den sonstigen Busverkehr, so dass eine eventuelle Hierarchie oder eine zeitliche Abfolge anderer Telegramme über den Bus nicht beeinflusst wird oder nur dann beeinflusst wird, wenn ein zur Deaktivierung oder Aktivierung einer Busmonitor-Funktionseinheit vorgesehenes Telegramm (oder ggf. eine Mehrzahl von Telegrammen) durch entsprechende Attribute als bevorrechtigt gegenüber anderen Telegrammen gekennzeichnet ist, wenn also z. B. einem solchen Telegramm eine besonders hohe Priorität zugewiesen ist.

Die erfindungsgemäße Lösung befasst sich mit dem Problem, dass bei den bisher im Stand der Technik bekannten Ansätzen für eine Untersuchung der o. g. Art die Notwendigkeit besteht, das Bussystem im laufenden Betrieb, im Falle einer Automatisierungslösung also während des Ablaufs des technischen Prozesses und während des Betriebs des Automatisierungssystems, auftrennen zu müssen. Nach einer solchen Auftrennung werden für eine Überwachung des Bussystems vorgesehene spezielle Funktionseinheiten, umfassend zumindest ein Diagnosegerät und einer Hardware zum physikalischen Auskoppeln von Telegrammen, an den Bus angeschlossen, die im Folgenden als Busmonitor bezeichnet werden. Das Anschließen solcher Busmonitore ist jedoch zum einen aufwendig und erfordert zum anderen in nachteiliger Art und Weise stets das Auftrennen des Bussystems, so dass damit zumindest für einen gewissen Zeitraum eine Erreichbarkeit sämtlicher über das Bussystem kommunikativ verbundener Geräte nicht gewährleistet ist. Zudem hat sich in der Praxis bereits das Lokalisieren - im Sinne einer räumlichen Eingrenzung - einer Störung im Bussystem als nicht trivial herausgestellt. Aufgrund dessen kann es bei einer Störungsuntersuchung vorkommen, dass ein solcher Busmonitor oder mehrere solcher Busmonitore mehrfach und zwar an verschiedenen Stellen an das Bussystem angeschlossen werden müssen, wodurch sich eine Summierung der damit einhergehenden Ausfallzeiten des Gesamtsystems ergibt.

Diese Erkenntnisse werden gemäß der Erfindung so umgesetzt, dass im Bussystem für jede beliebige Kombination von Kommunikationsteilnehmern zumindest ein Kommunikationsverbund mit mindestens zwei Kommunikationsteilnehmern definiert werden kann, von denen einer eine Funktionseinheit umfasst, welche die Funktionalität eines Busmonitors abdeckt. Gemäß der Erfindung ist - kurz gefasst - also vorgesehen, dass die an sich bekannte Funktionalität eines Busmonitors, der bisher separat und damit nur temporär an das Bussystem angeschlossen wurde, von zumindest einem Kommunikationsteilnehmer, der bereits dem Bussystem zugeordnet ist und damit nicht nur temporär Bestandteil des Kommunikationsverbundes ist, umfasst ist. Mit der Integration einer solchen Busmonitor-Funktionalität in zumindest einem Kommunikationsteilnehmer im Bussystem ist diese für eventuelle Untersuchungen jederzeit verfügbar, ohne dass dazu ein Auftrennen des Bussystems und eine damit notwendig einhergehende Unterbrechung des Busverkehrs notwendig wäre.

Bezüglich des Verfahrens wird die o. g. Aufgabe erfindungsgemäß gelöst durch die Merkmale des Anspruchs 5. Dabei ist vorgesehen, dass beim Betrieb eines Kommunikationsverbunds der o. g. oder nachfolgend beschriebenen Art einzelne oder mehrere Busmonitor-Funktionseinheiten über ein diesbezügliches im Kommunikationsverbund unterstütztes Busprotokoll oder zumindest eine Telegramm gemäß einem im Kommunikationsverbund unterstützten Busprotokoll aktiviert oder deaktiviert werden. Damit ist die bedarfsgemäße Zuschaltbarkeit der Busmonitor-Funktionalität gewährleistet, ohne dass zur deren Aktivierung ein Eingriff in das Bussystem im Sinne einer temporären Auftrennung, Deaktivierung oder dergleichen erforderlich wäre.

Die abhängigen Ansprüche sind auf bevorzugte Ausführungsformen der vorliegenden Erfindung gerichtet. In Unteransprüchen verwendete Rückbeziehungen weisen auf die weitere Ausbildung des Gegenstandes des Hauptanspruches durch die Merkmale des jeweiligen Unteranspruchs hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Weiter vorteilhaft ist vorgesehen, dass mit dem Aktivieren der oder jeder Busmonitor-Funktionseinheit zumindest eine Filter- und/oder Triggerbedingung bei der jeweiligen Busmonitor-Funktionseinheit auswählbar ist. Die oder jede Filter- und/oder Triggerbedingung wird dazu entweder durch die Busmonitor-Funktionseinheit selbst vorgehalten, z. B. in einem von der Busmonitor-Funktionseinheit umfassten oder der Busmonitor-Funktionseinheit zugeordneten Speicher. Als Alternative zum Auswählen solcher Bedingungen bei der jeweiligen Busmonitor-Funktionseinheit kommt auch eine Übermittlung solcher Bedingungen an die jeweilige Busmonitor-Funktionseinheit in Betracht. Hier kann vorgesehen sein, dass jede Busmonitor-Funktionseinheit eine Anzahl vordefinierter Filter- und/oder Triggerbedingungen bereits umfasst und diese für eine Auswahl bei der Busmonitor-Funktionseinheit zur Verfügung stehen. Solche Filter- und/oder Triggerbedingungen werden im Folgenden zur sprachlichen Unterzeichnung als Basisbedingungen bezeichnet. Weitere Filter- und/oder Triggerbedingungen können durch einen Bediener definiert werden, der dazu insbesondere auf die Basisbedingungen zugreifen kann, z. B. derart, dass durch eine logische Verknüpfung einzelner oder mehrere Basisbedingungen sich eine neue Filter- und/oder Triggerbedingung ergibt. Auf diese Art und Weise ist durch die Installation, also entweder Auswahl oder Übermittlung, einer Filter- und/oder Triggerbedingung eine bedarfsgemäße Überwachung des Busverkehrs durch die jeweilige Busmonitor-Funktionseinheit möglich, die durch die Auswahl oder Übermittlung geeigneter Bedingungen äußerst flexibel an die jeweiligen Notwendigkeiten anpassbar ist.

Weiter bevorzugt ist vorgesehen, dass das Aktivieren oder Deaktivieren der oder jeder Busmonitor-Funktionseinheit durch einen vom Kommunikationsverbund umfassten zentralen Kommunikationsteilnehmer erfolgt. Bei einem Kommunikationsverbund mit einem ersten und einem zweiten Kommunikationsteilnehmer fungiert entweder der erste oder der zweite Kommunikationsteilnehmer als zentraler Kommunikationsteilnehmer. Bei einem Kommunikationsverbund mit mehr als zwei Kommunikationsteilnehmern ist jedoch vorteilhaft vorgesehen, dass für den gesamten Kommunikationsverbund genau ein Kommunikationsteilnehmer als zentraler Kommunikationsteilnehmer fungiert, so dass auf diesem beispielsweise eine Anzahl häufig wiederkehrender Verknüpfungen von Basisbedingungen vorgehalten werden kann und diese schnell und in einer benutzerfreundlichen Art und Weise zur Übermittlung an einzelne Busmonitor-Funktionseinheiten zur Verfügung stehen. Mit der Verwendung eines zentralen Kommunikationsteilnehmers ist darüber hinaus auch möglich, gleichzeitig oder im Wesentlichen gleichzeitig mehrere Busmonitor-Funktionseinheiten zu aktivieren oder zu deaktivieren oder mehreren Busmonitor-Funktionseinheiten gleiche Filter und/oder Triggerbedingungen zu übermitteln oder gleiche Filter und/oder Triggerbedingungen auszuwählen.

Gemäß einer weiteren Ausgestaltung dieser Ausführungsform der Erfindung ist vorgesehen, dass ein Aktivieren oder Deaktivieren der oder jeder Busmonitor-Funktionseinheit, insbesondere durch den zentralen Kommunikationsteilnehmer, aufgrund einer Auswertung von im Kommunikationsverbund übertragenen Daten durch ein Expertensystem erfolgt. Das Expertensystem steuert dabei die automatische Aktivierung oder Deaktivierung einzelner oder mehrerer Busmonitor-Funktionseinheiten. Das Expertensystem greift dabei zur Steuerung der Aktivierung oder Deaktivierung einzelner oder mehrerer Busmonitor-Funktionseinheiten auf eine von dem Expertensystem umfasste Wissensbasis zurück, die Regeln oder dergleichen umfasst, anhand derer der Busverkehr auswertbar oder bewertbar ist, um anhand solcher Auswertungen oder Bewertungen eine Aktivierung oder Deaktivierung einzelner Busmonitor-Funktionseinheiten vorzunehmen.

Weiter vorteilhaft ist in diesem Zusammenhang vorgesehen, dass zusätzlich oder alternativ die Auswahl oder Übermittlung von Filter und/oder Triggerbedingungen ebenfalls durch das Expertensystem erfolgt, wobei das Expertensystem für eine solche Auswahl oder Übermittlung auf die oben genannte Wissensbasis, eventuell eine speziell dafür vorgesehene weitere Wissensbasis, zugreift.

Zur Ausführung des Verfahrens der oben oder nachfolgend beschriebenen Art ist ein Computerprogramm mit durch einen Computer, also z. B. eine Verarbeitungseinheit eines Kommunikationsteilnehmers, insbesondere ein Mikroprozessor, (Mikro-) Controller. ASIC, FPGA, etc., ausführbaren Programmanweisungen zu dessen Implementierung vorgesehen. Insoweit betrifft die Erfindung auch ein solches Computerprogramm oder ein Computerprogrammprodukt, insbesondere ein Speichermedium, mit einem solchen Computerprogramm.

Die mit der Anmeldung eingereichten Patentansprüche sind Formulierungsvorschläge ohne Präjudiz für die Erzielung weitergehenden Patentschutzes. Die Anmelderin behält sich vor, noch weitere, bisher nur in der Beschreibung und/oder Zeichnung offenbarte Merkmalskombination zu beanspruchen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie z. B. Prüfverfahren betreffen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen
- FIG 1: ein zur Steuerung eines technischen Prozesses vorgesehenes Automatisierungssystem,
- FIG 2: weitere Details des Automatisierungssystems mit einer Mehrzahl von Kommunikationsteilnehmern,
- FIG 3: einen Kommunikationsteilnehmer mit einer Busmonitor-Funktionseinheit und
- FIG 4: ein Automatisierungssystem, in dem ein Expertensystem zur Aktivierung und/oder Deaktivierung einzelner oder mehrerer Busmonitor-Funktionseinheiten der von dem Automatisierungssystem umfassten Kommunikationsteilnehmer vorgesehen ist.

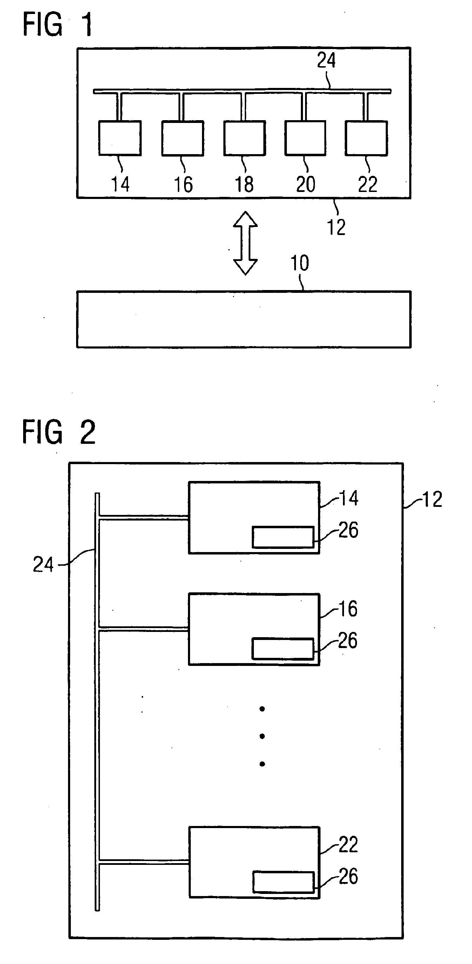

FIG 1 zeigt in schematisch vereinfachter Form ein zur Steuerung und/oder Überwachung eines nicht näher dargestellten technischen Prozesses 10 vorgesehenes Automatisierungssystem 12. Das Automatisierungssystem 12 umfasst einen ersten und zweiten Kommunikationsteilnehmer 14, 16 sowie ggf. weitere Kommunikationsteilnehmer 18, 20, 22. Die Kommunikationsteilnehmer 14-22 sind untereinander kommunikativ über einen Bus 24, z. B. einen so genannten Feldbus, verbunden. Bei den Kommunikationsteilnehmern 14-22 handelt es sich entweder um Automatisierungsgeräte, also Geräte, die unmittelbar zur Steuerung und/oder Überwachung des technischen Prozesses 10 vorgesehen sind und dazu in an sich bekannter Art und Weise mit dem technischen Prozess 10 und/oder untereinander Daten, insbesondere Steuerdaten vom oder für den technischen Prozess 10 austauschen. Bei anderen Kommunikationsteilnehmern 14-22 handelt es sich um Komponenten, bei denen keine unmittelbare Interaktion mit dem technischen Prozess 10 vorgesehen ist, also z. B. um Komponenten, wie sie in Bussystemen in an sich bekannter Art und Weise z. B zur Signalauffrischung (so genannte Repeater) oder dergleichen vorgesehen sind. Weitere Beispiele für solche Komponenten sind übliche so genannte Personal Computer, so genannte Bedien- und Beobachtungsgeräte (B&B Geräte), ein Expertensystem, etc. Derartige Geräte oder Komponenten werden im Folgenden unter der Bezeichnung Kommunikationsteilnehmer 14-22 zusammengefasst.

FIG 2 zeigt das Automatisierungssystem 12 gemäß FIG 1 mit weiteren Details. Dabei ist dargestellt, dass mindestens einer der Kommunikationsteilnehmer eine Busmonitor-Funktionseinheit 26 umfasst, die die Funktionalität eines Busmonitors abdeckt. Die Funktionalität eines Busmonitors ist an sich bekannt, wobei deren Funktionalität auf Basis bekannter Funktionen grundsätzlich beliebig erweiterbar ist, z. B. durch Kombination oder Ergänzung bekannter Funktionen. Solche Busmonitore sind bisher zur Leitungsanalyse, also zur Analyse von über das Bussystem 24 übertragenen Daten - dem Busverkehr -, verwendet worden. Ein Busmonitor der im Stand der Technik bekannten Art ist jedoch am Bussystem 24 ein zusätzlicher Kommunikationsteilnehmer, der normalerweise nicht am Busverkehr teilnimmt, wobei zu dessen Anschluss an das Bussystem 24 ein Auftrennen des Bussystems 24 und damit eine zumindest zeitweilige Unterbrechung des Busverkehrs über das Bussystem 24 und damit einhergehend der Steuerung und/oder Überwachung des technischen Prozesses 10 (FIG 1) erforderlich ist. Diesen zentralen Nachteil der im Stand der Technik bekannten Lösung sucht die Erfindung dadurch zu überwinden, dass mindestens einer der Kommunikationsteilnehmer 14-22, also ein Gerät oder eine Komponente, das bzw. die nicht nur temporär an das Bussystem 24 angeschlossen ist, die Busmonitor-Funktionseinheit 26 umfasst. Bei der dargestellten Situation in FIG 2 umfasst jeder der dargestellten Kommunikationsteilnehmer 14-22 eine Busmonitor-Funktionseinheit 26. Jeweils zwei Kommunikationsteilnehmer 14-22, z. B. der erste und der zweite Kommunikationsteilnehmer 14, 16, werden dabei zur sprachlichen Unterscheidung als Kommunikationsverbund bezeichnet. Der Kommunikationsverbund ergibt sich dabei aufgrund der über das Bussystem 24 bestehenden kommunikativen Verbindung zwischen den jeweiligen Kommunikationsteilnehmern 14-22. Die Erfindung sieht vor, dass mindestens einer der Kommunikationsteilnehmer 14-22 eines solchen Kommunikationsverbundes eine Busmonitor-Funktionseinheit 26 umfasst. Dann ist es z. B. möglich, dass die einem der Kommunikationsteilnehmer 14-22 zugeordnete Busmonitor-Funktionseinheit 26 den Busverkehr analysiert und diesbezügliche Daten dem zumindest einen komplementären Kommunikationsteilnehmer 14-22 im Kommunikationsverbund übermittelt. Eine Erhöhung der Flexibilität bei der Überwachung des Busverkehrs ergibt sich, wenn jeder der Kommunikationsteilnehmer 14-22 oder zumindest Kommunikationsteilnehmer einer bestimmten Kategorie, z. B. sämtliche Automatisierungsgeräte, eine solche Busmonitor-Funktionseinheit 26 umfassen. Dann kann bedarfsgemäß eine Busmonitor-Funktionseinheit 26 zur Überwachung des Busverkehrs aktiviert werden und eine Übermittlung diesbezüglicher Daten an einen anderen von dem Kommunikationsverbund umfassten Kommunikationsteilnehmer 14-22 erfolgen.

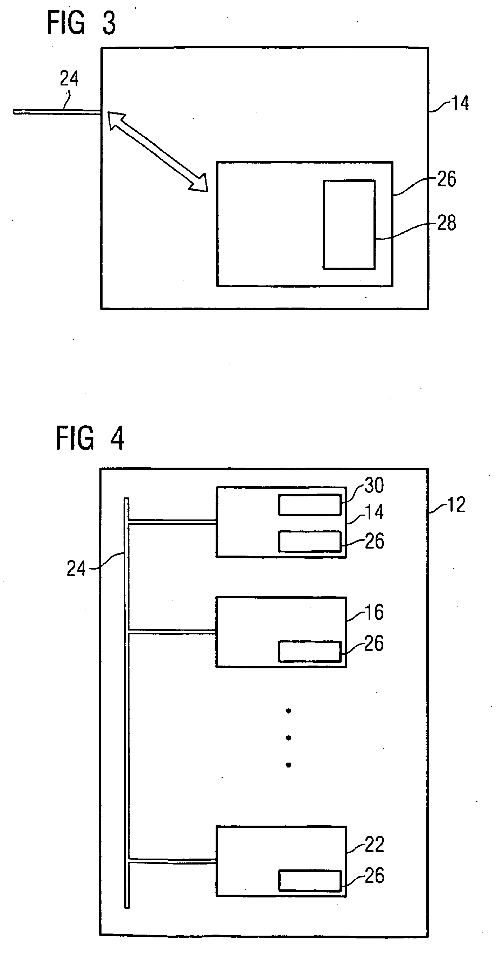

FIG 3 zeigt in schematisch vereinfachter Darstellung am Beispiel des ersten Kommunikationsteilnehmers 14 weitere Details zur Ausgestaltung der Busmonitor-Funktionseinheit 26. Dargestellt ist, dass die Busmonitor-Funktionseinheit 26 einen Speicher 28 umfasst, in dem in an sich bekannter Art und Weise Filter und/oder Triggerbedingungen, die zur Überwachung und/oder Analyse des Busverkehrs verwendbar sind, gespeichert sind. Die Busmonitor-Funktionseinheit 26 überwacht also die über das Bussystem 24 übermittelten Daten, indem sie den über das Bussystem 24 abgewickelten Busverkehr "mithört". Der jeweilige Kommunikationsteilnehmer selbst, also z. B. der in FIG 3 dargestellte erste Kommunikationsteilnehmer 14, wertet unabhängig davon den Busverkehr ebenfalls aus, indem Telegramme, die für ihn bestimmt sind, empfangen werden. Letztere Funktionalität ist jedoch an sich bekannt und wird im Folgenden nicht weiter erörtert.

Hinsichtlich der Überwachung des Busverkehrs über die Busmonitor-Funktionseinheit 26 ist vorgesehen, dass die Busmonitor-Funktionseinheit 26 z. B. Daten in Bezug auf den Busverkehr in dem ihr zugeordneten Speicher 28 für einen eventuellen späteren Abruf hinterlegt. Bei einer Verwendung von Filter und/oder Triggerbedingungen ist deren Anwendung auf den Busverkehr vorgesehen, so dass z. B. Telegramme oder bestimmte Signalfolgen, mit den Daten am Bussystem 24 codiert werden, erkennbar sind. Damit sind umfangreiche und detaillierte Prüfungen des Busverkehrs möglich. Eine solche Prüfung wird im Folgenden auch als "Monitorbetrieb" bezeichnet. Sie kann aufgrund des Ansatzes gemäß der Erfindung parallel zum Produktivbetrieb erfolgen, also während fortgesetzter Steuerung und/oder Überwachung des technischen Prozesses 10 (FIG 1), ohne dass dabei der Produktivbetrieb gestört oder beeinflusst wäre. Zu nennen ist in diesem Zusammenhang insbesondere die Prüfung so genannter Frame-Inhalte. Im Rahmen der Prüfung von Frame-Inhalten sind z. B. Telegramme erkennbar, die an eine einen Kommunikationsteilnehmer 14-22 in an sich bekannter Art und Weise identifizierende Adresse gerichtet sind. Auf dieser Basis ist in einem komplexeren Kommunikationsverbund z. B. erkennbar, welche Kommunikationsteilnehmer 14-22 ein für einen bestimmten Kommunikationsteilnehmer 14-22 vorgesehenes Telegramm erkennen, während es diese Kommunikationsteilnehmer 14-22 auf dem Weg zur Übermittlung an den eigentlich zum Empfang des Telegramms vorgesehene Kommunikationsteilnehmer 14-22 passiert, wenn dieser Kommunikationsteilnehmer 14-22 selbst das Telegramm nicht empfängt. Auf Basis solcher Daten ist z. B. erkennbar, an welcher Stelle des Bussystems 24 eine Ausnahmesituation, z. B. ein Fehler durch eine Störung der Signalübertragung, aufgetreten ist, die dahingehend räumlich eingrenzbar wäre, dass dieser Fehler zwischen einem Kommunikationsteilnehmer 14-22, der einen Frame mit der jeweiligen Adresse gerade nicht mehr empfängt und einem Kommunikationsteilnehmer 14-22, der einen solchen Frame noch empfängt, liegen muss. Weitere Auswertungsmöglichkeiten, insbesondere komplexere Auswertungsmöglichkeiten durch logische Kombination einzelner Auswertungskriterien im Wege einer Definition diesbezüglicher Filter und/oder Triggerbedingungen sind jederzeit denkbar. Als Prüfung von Frame-Inhalten kann auch die Auswertung von Prüfsummen oder dergleichen, z. B. CRC-Daten, aufgefasst werden. Des Weiteren kann unter die Prüfung von Frame-Inhalten auch die Analyse im Hinblick auf eine Übereinstimmung mit durch das jeweilige Protokoll vorgegebenen Randbedingungen fallen. Als Randbedingung kommen dabei Kriterien in Betracht, die das dem jeweiligen Telegramm zugrunde liegende Signal, also Flanke, Höhe des High-Pegels, etc., beschreiben. Darüber hinaus kommen zur Überwachung des Busverkehrs auch eine Prüfung des zeitlichen Abstands von Frames, eine Zeitstempelung von Bus- und/oder Hardware-Ereignissen, eine Prüfung externer Hardware-Ereignisse über Eingangspins eines zur Anschaltung des jeweiligen Kommunikationsteilnehmers 14-22 an das Bussystem 24 vorgesehenen Bus-ASICs, eine Ausgabe von erkannten Ereignissen über Ausgangspins eines solchen Bus-ASICs und dergleichen in Betracht. Diesbezügliche Daten oder Ergebnisse werden in dem Speicher 28 abgelegt, der insbesondere als konfigurierbarer Speicher ausgeführt ist, wodurch einerseits eine Datentiefe und andererseits mit der Speichergröße einhergehende Kosten des Kommunikationsteilnehmers 14-22 skalierbar sind.

FIG 4 zeigt eine Ausführungsform des Automatisierungssystems 12 ähnlich der bereits in FIG 2 dargestellten Ausführungsform. Im Unterschied zu der in FIG 2 dargestellten Ausführungsform umfasst zumindest einer der Kommunikationsteilnehmer 14-22, z. B. der erste Kommunikationsteilnehmer 14, eine Funktionalität zur Steuerung und/oder Überwachung der Busmonitor-Funktionseinheiten 26, die z. B. in Form eines Expertensystems 30 implementiert ist. Bei Verwendung eines Expertensystems 30 zur Steuerung und/oder Überwachung der Busmonitor-Funktionseinheiten 26 ist dieses z. B. zur automatischen Aktivierung oder Deaktivierung einzelner oder mehrerer Busmonitor-Funktionseinheiten 26 vorgesehen. Eine automatische Aktivierung einzelner Busmonitor-Funktionseinheiten 26 kann z. B. erfolgen, wenn während einer bestimmten Zeitspanne von einem Kommunikationsteilnehmer 14-22, der aufgrund von Projektierungsdaten als zum Kommunikationsverbund gehörig bekannt ist, keine Telegramme, insbesondere keine Quittungstelegramme, eingehen. Alternativ könnte auch vorgesehen sein, dass bei bestimmten oder sämtlichen Kommunikationsteilnehmern 14-22, deren Busmonitor-Funktionseinheit 26 in einer Art und Weise aktiviert ist, dass eine Form von "Basisüberwachung" des Busverkehrs stattfindet, wobei bei einer Erkennung einer Ausnahmesituation durch eine oder mehrere der Busmonitor-Funktionseinheiten 26 eine diesbezügliche Meldung an das Expertensystem 30 abgesetzt wird, das daraufhin eine Aktivierung einzelner oder mehrerer Busmonitor-Funktionseinheiten 26 in einer Betriebsart vornimmt, die über diese Basisfunktionalität hinausgeht, so dass eine weitergehende Analyse des Busverkehrs möglich wird. Zusätzlich oder alternativ erfolgt durch das Expertensystem 30 auch eine Auswahl oder Übermittlung von Filter- und/oder Triggerbedingungen, die bei der Auswertung des Busverkehrs zugrunde gelegt werden. Aufgrund von Regeln oder dergleichen, also insbesondere hinterlegtem Expertenwissen, kann das Expertensystem 30 entweder in der jeweiligen Busmonitor-Funktionseinheit 26 hinterlegte Filter- und/oder Triggerbindungen auswählen, oder neue, also nicht bereits in der Busmonitor-Funktionseinheit 26 hinterlegte Bedingungen, vorsehen und diese zur Anwendung bei der Überwachung des Busverkehrs an die jeweilige Busmonitor-Funktionseinheit 26 übermitteln.

Einer der Vorteile der Erfindung besteht darin, dass nunmehr Fehler im Kommunikationsverbund lokalisierbar sind, ohne den Kommunikationsverbund zumindest zeitweise aufzutrennen und den Busverkehr zu unterbrechen. Auf dieser Basis kann im Fehlerfall z. B. leicht geprüft werden, warum bestimmte Frames nicht bei dem Kommunikationsteilnehmer 14-22, für den sie eigentlich bestimmt waren, ankommen und bis zu welchem Kommunikationsteilnehmer 14-22 die Übermittlung noch erfolgt ist. Damit ist eine räumliche Eingrenzung des Fehlerfalls, z. B. ein defektes Kabel, möglich. Insgesamt ist es damit möglich, parallel zum Produktivbetrieb, also während ununterbrochener Steuerung des jeweiligen technischen Prozesses 10, bei Bedarf eine oder mehrere Busmonitor-Funktionseinheiten 26 dynamisch zu aktivieren und damit einzelne Segmente des Bussystems 24 zu überwachen. Die oder jede Busmonitor-Funktionseinheit 26 bietet dabei zumindest die gleiche Analysefunktionalität wie bisher verwendete, separat an das Bussystem 24 anzuschaltende Busmonitore, wobei im Hinblick auf von üblichen Busmonitoren bereitgestellte Speicherkapazitäten durchaus Unterschiede derart bestehen können, dass die Speicherkapazität der Busmonitor-Funktionseinheit 26 geringer ist als die vergleichbare Speicherkapazität eines Busmonitors. Eine Busmonitor-Funktionseinheit 26 lässt sich entsprechend auch als "netzintegrierter Busmonitor" bezeichnen. Eine Aktivierung oder Deaktivierung erfolgt z. B. mittels eines dem jeweiligen Busprotokoll genügenden Telegramms, insbesondere über ein durch einen zentralen Kommunikationsteilnehmer abgesetztes Telegramm. Als zentraler Kommunikationsteilnehmer kommt ein Diagnose-Controller, ein Diagnose-PC oder dergleichen in Betracht.

Durch die Verwendung der Filterbedingungen kann die Datenmenge soweit reduziert werden, dass der Ansatz gemäß der Erfindung auch bei kleinen, so genannten embedded Systemen mit wenig Speicher angewendet werden kann. Der Einsatz von Triggerbedingungen ermöglicht es zudem, auf bestimmte, durch die Triggerbedingungen definierte Situationen, zu reagieren und das Eintreten solcher Bedingungen, insbesondere zusammen mit in diesem Zusammenhang aufgezeichneten Daten oder Ergebnissen, zu protokollieren (Trace). Solche Protokolldaten können auch als nicht überschreibbar vorgesehen sein, so dass bestimmte Ausnahmesituationen auch nach längerer Zeit noch verifizierbar bleiben.

Damit lässt sich die Erfindung kurz wie folgt darstellen: Es wird ein Kommunikationsverbund mit mindestens einem ersten und einem zweiten Kommunikationsteilnehmer 14, 16 sowie ein Verfahren zum Betrieb eines solchen Kommunikationsverbundes angegeben, bei dem mindestens einer der Kommunikationsteilnehmer 14, 16 eine Busmonitor-Funktionseinheit 26 umfasst, die die Funktionalität eines Busmonitors abdeckt, wobei der mindestens eine Kommunikationsteilnehmer 14, 16 mit der Busmonitor-Funktionseinheit 26 nicht nur temporär dem Kommunikationsverbund zugeordnet ist, so dass bei dem Verfahren zum Betrieb des Kommunikationsverbunds einzelne oder mehrere Busmonitor-Funktionseinheiten 26 über ein im Kommunikationsverbund unterstütztes Busprotokoll aktiviert oder deaktiviert werden können, ohne dass dabei eine Steuerung eines externen technischen Prozesses 10 durch den oder jeden Kommunikationsteilnehmer 14, 16 unterbrochen wird.

## Patentansprüche

1. Kommunikationsverbund mit mindestens einem ersten und einem zweiten Kommunikationsteilnehmer (14, 16)
wobei mindestens einer der Kommunikationsteilnehmer (14, 16) eine Busmonitor-Funktionseinheit (26) umfasst, die die Funktionalität eines Busmonitors abdeckt, wobei der mindestens eine Kommunikationsteilnehmer (14, 16) bereits dem Bussystem zugeordnet ist und damit Bestandteil des Kommunikationsverbundes ist,
**dadurch gekennzeichnet,**
**dass** die Busmonitor-Funktionseinheit (26) manuell oder automatisch, insbesondere durch einem mit dem die Busmonitor-Funktionseinheit (26) umfassenden Kommunikationsteilnehmer (14, 16) kommunikativ verbundenen Kommunikationsteilnehmer (14, 16), aktivier- und deaktivierbar ist, und
**dass** einzelne oder mehrere Busmonitor-Funktionseinheiten (26) über ein im Kommunikationsverbund unterstütztes Busprotokoll aktivierbar oder deaktivierbar sind.

2. Kommunikationsverbund nach Anspruch 1,
**dadurch gekennzeichnet,**
**dass** mit dem Aktivieren der oder jeder Busmonitor-Funktionseinheit (26) zumindest eine Filter- und/oder Triggerbedingung bei der jeweiligen Busmonitor-Funktionseinheit (26) auswählbar und/oder an die jeweilige Busmonitor-Funktionseinheit (26) übermittelbar ist.

3. Verfahren zum Betrieb eines Kommunikationsverbunds nach einem der vorangehenden Ansprüche,
**dadurch gekennzeichnet,**
**dass** die Busmonitor-Funktionseinheiten (26) des Kommunikationsverbunds über ein im Kommunikationsverbund unterstütztes Busprotokoll aktiviert oder deaktiviert werden.

4. Verfahren nach Anspruch 3,
**dadurch gekennzeichnet,**
**dass** das Aktivieren oder Deaktivieren der oder jeder Busmonitor-Funktionseinheit (26) durch einen vom Kommunikationsverbund umfassten zentralen Kommunikationsteilnehmer (14) erfolgt.

5. Verfahren nach Anspruch 3 oder 4,
**dadurch gekennzeichnet,**
**dass** ein Aktivieren
oder Deaktivieren der oder jeder Busmonitor-Funktionseinheit (26), insbesondere durch den zentralen Kommunikationsteilnehmer (14), aufgrund einer Auswertung von im Kommunikationsverbund übertragenen Daten durch ein Expertensystem (30) erfolgt.

6. Verfahren nach Anspruch 3, 4 oder 5,
**dadurch gekennzeichnet,**
**dass** mit dem Aktivieren der oder jeder Busmonitor-Funktionseinheit (26) Filter- und/oder Triggerbedingungen bei
der jeweiligen Busmonitor-Funktionseinheit (26) ausgewählt und/oder an die jeweilige Busmonitor-Funktionseinheit (26) übermittelt werden.

7. Verfahren nach Anspruch 5 und 6,
**dadurch gekennzeichnet,**
**dass** die Auswahl oder Übermittlung von Filter- und/oder Triggerbedingungen durch das Expertensystem (30) erfolgt.

8. Computerprogramm mit durch einen Computer ausführbaren Programmcodeanweisungen zur Implementierung des Verfahrens nach einem der Ansprüche 3 bis 7 wenn das Computerprogramm auf einem Computer ausgeführt wird.

9. Computerprogrammprodukt mit einem durch einen Computer ausführbaren Computerprogramm gemäß Anspruch 8.

## Claims

1. Communication network having at least a first and a second communication subscriber (14, 16),
wherein at least one of the communication subscribers (14, 16) comprises a bus monitor functional unit (26) which covers the functionality of a bus monitor, the at least one communication subscriber (14, 16) already being associated with the bus system and hence being part of the communication network,
**characterized**
**in that** the bus monitor functional unit (26) can be activated and deactivated manually or automatically, particularly by a communication subscriber (14, 16) which is communicatively connected to the communication subscriber (14, 16) that comprises the bus monitor functional unit (26), and
**in that** individual or a plurality of bus monitor functional units (26) can be activated or deactivated using a bus protocol which is supported in the communication network.

2. Communication network according to Claim 1,
**characterized**
**in that** when the or each bus monitor functional unit (26) is activated, at least one filter and/or trigger condition can be selected on the respective bus monitor functional unit (26) and/or can be transmitted to the respective bus monitor functional unit (26).

3. Method for operating a communication network according to one of the preceding claims,
**characterized**
**in that** the bus monitor functional units (26) of the communication network are activated or deactivated using a bus protocol which is supported in the communication network.

4. Method according to Claim 3,
**characterized**
**in that** the or each bus monitor functional unit (26) is activated or deactivated by a central communication subscriber (14) which the communication network comprises.

5. Method according to Claim 3 or 4,
**characterized**
**in that** the or each bus monitor functional unit (26) is activated or deactivated, particularly by the central communication subscriber (14), on the basis of an evaluation of data transmitted in the communication network by an expert system (30).

6. Method according to Claim 3, 4 or 5,
**characterized**
**in that** when the or each bus monitor functional unit (26) is activated, filter and/or trigger conditions are selected on the respective bus monitor functional unit (26) and/or are transmitted to the respective bus monitor functional unit (26).

7. Method according to Claims 5 and 6,
**characterized**
**in that** the filter and/or trigger conditions are selected or transmitted by the expert system (30).

8. Computer program having computer-executable program code instructions for implementing the method according to one of Claims 3 to 7 when the computer program is executed on a computer.

9. Computer program product having a computer-executable computer program according to Claim 8.

## Revendications

1. Réseau de communication comportant au moins un premier et un deuxième participant à la communication ( 14, 16 ), au moins l'un des participants ( 14, 16 ) comprenant une unité fonctionnelle de moniteur de bus ( 26 ) qui assure la fonctionnalité d'un moniteur de bus, ce ou ces participants ( 14, 16 ) étant déjà associé au système de bus et faisant donc partie du réseau de communication,
**caractérisé par le fait que** l'unité fonctionnelle de moniteur de bus ( 26 ) est activable et désactivable manuellement ou automatiquement, notamment par un participant ( 14, 16 ) relié sur le plan de la communication au participant ( 14, 16 ) comprenant l'unité fonctionnelle de moniteur de bus ( 26 ), et que certaines ou plusieurs unités fonctionnelles de moniteur de bus ( 26 ) sont activables ou désactivables par l'intermédiaire d'un protocole de bus supporté dans le réseau de communication.

2. Réseau de communication selon la revendication 1, **caractérisé par le fait que**, avec l'activation de l'unité fonctionnelle de moniteur de bus ou de chaque unité fonctionnelle de moniteur de bus ( 26 ), au moins une condition de filtrage et/ou de déclenchement peut être sélectionnée dans l'unité fonctionnelle de moniteur de bus ( 26 ) respective et/ou peut être transmise à l'unité fonctionnelle de moniteur de bus ( 26 ) respective.

3. Procédé de fonctionnement d'un réseau de communication selon l'une des revendications précédentes, **caractérisé par le fait que** les unités fonctionnelles de moniteur de bus ( 26 ) du réseau de communication sont activées ou désactivées par l'intermédiaire d'un protocole de bus supporté dans le réseau de communication.

4. Procédé selon la revendication 3, **caractérisé par le fait que** l'activation ou la désactivation de l'unité fonctionnelle de moniteur de bus ou de chaque unité fonctionnelle de moniteur de bus ( 26 ) est effectuée par un participant central ( 14 ) compris dans le réseau de communication.

5. Procédé selon la revendication 3 ou 4, **caractérisé par le fait qu'**une activation ou une désactivation de l'unité fonctionnelle de moniteur de bus ou de chaque unité fonctionnelle de moniteur de bus ( 26 ), notamment par le participant central ( 14 ), s'effectue par un système expert ( 30 ) sur la base d'une exploitation de données transmises dans le réseau de communication.

6. Procédé selon la revendication 3, 4 ou 5, **caractérisé par le fait que**, avec l'activation de l'unité fonctionnelle de moniteur de bus ou de chaque unité fonctionnelle de moniteur de bus ( 26 ), des conditions de filtrage et/ou de déclenchement sont sélectionnées dans l'unité fonctionnelle de moniteur de bus ( 26 ) respective et/ou sont transmises à l'unité fonctionnelle de moniteur de bus ( 26 ) respective.

7. Procédé selon les revendications 5 et 6, **caractérisé par le fait que** la sélection ou la transmission de conditions de filtrage et/ou de déclenchement est effectuée par le système expert ( 30 ).

8. Programme informatique ayant des instructions de code de programme exécutables par un ordinateur pour la mise en oeuvre du procédé selon l'une des revendications 3 à 7 lorsque le programme informatique est exécuté sur un ordinateur.

9. Produit de programme informatique ayant un programme informatique exécutable par un ordinateur selon la revendication 8.
